# FASCICULE DE BREVET EUROPEEN

(11) **EP 2 958 004 B1**
(45) Date de publication et mention de la délivrance du brevet: **01.08.2018**
(21) Numéro de dépôt: 15172161.0
(22) Date de dépôt: 15.06.2015
(51) Int. Cl.: G06F 3/0485, G06F 3/0482, G06F 3/0488, G06F 3/0484

(54) **PROCÉDÉ DE SELECTION D'UN ÉLÉMENT DANS UNE LISTE**
VERFAHREN UM EIN ELEMENT IN EINER LISTE AUSZUWÄHLEN
METHOD TO SELECT AN ELEMENT IN A LIST

(30) Priorité: 17.06.2014 FR 1455546
(43) Date de publication de la demande: 23.12.2015
(73) Titulaire: Orange, 75015 Paris (FR)
(72) Inventeur: Guignon, Richard, 35150 AMANLIS (FR); Thunin, Olivier, 22700 LOUANNEC (FR)

(56) Documents cités:
- EP-A1- 2 487 613
- WO-A1-01/69369
- US-A1- 2010 175 027
- US-A1- 2013 067 393
- Nike: "Nike+ FuelBand", , 2 février 2012 (2012-02-02), pages 1-26, XP055172474, https://apps.fcc.gov/oetcf/eas/reports/Vie wExhibitReport.cfm?mode=Exhibits&RequestTi meout=500&calledFromFrame=N&application_id =598861&fcc_id=%27QYUM411%27 Extrait de l'Internet: URL:https://apps.fcc.gov/eas/GetApplicatio nAttachment.html?id=1630150 [extrait le 2015-02-26]

## Description

### DOMAINE TECHNIQUE

L'invention appartient au domaine des interfaces utilisateurs et concerne plus particulièrement un procédé de défilement d'une liste d'éléments sur un écran.

### ART ANTÉRIEUR

La miniaturisation des dispositifs électroniques et notamment des dispositifs de communication sans fil permet aujourd'hui le développement de nombreux objets dit « objets connectés ». Il s'agit souvent d'objets classiques auxquels sont ajoutés des capacités communication. Il peut s'agir par exemple d'un pot de fleur capable d'informer l'utilisateur lorsqu'il est nécessaire de procéder à l'arrosage, d'une brosse à dents adaptée pour transmettre des statistiques d'usages, d'un bracelet permettant de recevoir des messages ou encore d'une montre à partir de laquelle il est possible de prendre des appels téléphoniques. Alors qu'il est possible aujourd'hui de miniaturiser les circuits électroniques de tels objets, les moyens d'interaction avec les utilisateurs ne peuvent être miniaturisés de la même manière. Par exemple, une brosse à dent connectée peut nécessiter des moyens d'interaction de façon à ce qu'un utilisateur puisse configurer une association avec un terminal en saisissant par exemple un code d'accès à un réseau sans fil. Pour cela, des moyens d'interaction présentant un minimum d'ergonomie sont nécessaires, comme par exemple un écran accompagné d'un dispositif de saisie. Du fait de la petite taille de certains équipements, l'encombrement de ces moyens d'interaction doit parfois être réduit au minimum. Par exemple, une brosse à dent connectée pourra comporter un petit écran capable d'afficher quelques caractères et un unique bouton. Afin que l'utilisateur puisse consulter les différentes informations fournies par un tel équipement ou en configurer des paramètres, un système de navigation adapté à ces moyens d'interactions minimalistes doit être mis en place.

Un tel équipement dispose souvent d'un menu dont un seul élément peut être affiché sur l'écran à un instant donné du fait de sa petite taille. De façon classique, pour faire défiler les différents éléments d'un menu sur ce genre d'équipement, l'utilisateur effectue une action sur l'unique bouton. Il est ainsi possible d'afficher successivement différents éléments d'un menu ou différents paramètres de configuration. Certains dispositifs permettent à l'utilisateur de sélectionner un élément en cours d'affichage par une pression de longue durée. Selon d'autres modes de fonctionnement, la sélection est effectuée lorsque l'utilisateur n'appuie pas sur le bouton pendant un certain temps. Généralement, lorsqu'un seul bouton est disponible pour parcourir les différentes entrées d'un menu ou les paramètres de configuration, les différents éléments à parcourir sont agencés de manière circulaire. Ainsi, lorsque l'utilisateur atteint par exemple le dernier élément d'un menu suite à des pressions
successives sur un bouton de navigation, une pression supplémentaire sur ce bouton affiche de nouveau le premier élément du menu.

On connaît le document WO 01/69369 A1 qui décrit un procédé de défilement d'une liste. Le défilement s'arrête automatiquement quand des élément particuliers ("sticky items") sont visualisés.

Certains dispositif comportent en outre un menu arborescent. L'utilisateur peut ainsi entrer dans un sous-menu en sélectionnant un élément en cours d'affichage par une pression longue, le sous-menu comportant généralement un élément « retour » en dernière position, qui permet de remonter au menu principal. Ainsi, lorsque l'utilisateur veut quitter le sous-menu, il effectue des pressions successives sur le bouton jusqu'à l'affichage de l'entrée « retour » puis effectue une sélection par un appui long.

Ce mode de navigation est un compromis que l'on retrouve sur un certain nombre d'équipements car il permet de rendre accessible de nombreuses fonctionnalités au travers d'une interface minimaliste composée d'un petit écran et d'un unique bouton.

Malgré tout, ce mode de navigation présente un inconvénient.

Lorsque l'utilisateur cherche à atteindre un élément particulier dans un menu, par exemple lorsqu'il veut atteindre l'élément « retour » permettant de revenir à un menu principal, il doit appuyer un certain nombre de fois jusqu'à atteindre l'élément recherché. Très souvent, en particulier lorsque le nombre d'éléments du menu est important, l'utilisateur appuie rapidement pour passer les éléments qui ne l'intéresse pas. Or, lorsque l'écran est petit, il n'est pas impossible de visualiser un élément à venir et l'utilisateur peut effectuer par mégarde un appui de trop. Du fait de la circularité du menu, l'utilisateur est alors obligé de parcourir à nouveau la totalité des éléments du menu pour tenter d'atteindre l'élément recherché. Le problème est particulièrement gênant lorsque le nombre d'éléments est variable car l'utilisateur ne sait pas combien de pressions effectuer pour atteindre un élément spécifique. Cet inconvénient occasionne une perte de temps pour l'utilisateur, une consommation accrue d'énergie pour le dispositif conduisant à une réduction de son autonomie et une usure prématurée du bouton de défilement.

Il existe donc un besoin pour un système de défilement qui permette de ne pas dépasser par erreur un élément spécifique dans une liste dont les éléments sont affichés successivement un écran.

### RÉSUMÉ DE L'INVENTION

À cet effet, l'invention concerne un procédé de défilement dans une liste comprenant une pluralité d'éléments sélectionnables et configurée de sorte qu'un seul élément de la liste est affiché à un instant donné sur une interface, l'affichage de l'élément suivant dans la liste étant déclenché par la détection d'une action de défilement effectuée par un utilisateur sur un dispositif d'entrée associé à l'interface, le procédé étant tel qu'il comporte des étapes d'affichage d'un élément de la liste ; de détermination qu'un élément prédéterminé de la liste est affiché ; et d'ouverture d'une période
d'inactivité de durée prédéterminée pendant laquelle les actions de défilement sur le dispositif d'entrée sont ignorées.

Lorsque l'utilisateur fait défiler les éléments d'une liste par des pressions successives sur un dispositif d'entrée, le procédé désactive les actions de défilement pendant une certaine période quand un élément spécifique est atteint. Par exemple, en utilisant un bracelet connecté doté d'un écran et d'un unique bouton, un utilisateur peut désigner comme élément spécifique le 5ème élément d'un menu circulaire comportant 10 éléments. Selon le procédé, lorsque l'utilisateur appuie successivement sur le bouton, le défilement des éléments du menu s'arrête temporairement à la 5ème position, même si l'utilisateur effectue des pressions supplémentaires sur le bouton. Ainsi, de façon avantageuse, le procédé permet à l'utilisateur de ne pas dépasser par erreur un élément spécifique. En évitant à l'utilisateur de parcourir à nouveau la liste, le procédé permet de réduire les interactions entre le dispositif et l'utilisateur, permettant ainsi de réduire la consommation d'énergie et de prolonger l'autonomie ainsi que la durée de vie du dispositif d'interaction.

Selon une réalisation particulière, le procédé est tel que l'interface est configurée pour afficher le premier élément de la liste lorsque l'action de défilement est détectée et que le dernier élément de la liste est affiché, et en ce que l'élément prédéterminé est le dernier élément de la liste.

Le procédé est ainsi adapté au dernier élément d'une liste circulaire et permet avantageusement d'éviter de revenir au premier élément de la liste en cas d'erreur et est particulièrement utile lorsque la liste comporte un nombre variable d'élements. Par exemple, quand la liste constitue un sous-menu dont le dernier élément est un élément de type « retour » qui permet un retour au menu principal, le procédé évite avantageusement, en bloquant les commandes de l'utilisateur pendant une période déterminée, de devoir parcourir à nouveau tous les éléments du menu lorsqu'une ou plusieurs pression supplémentaires sur le bouton de défilement sont réalisées par erreur.

Selon un mode de réalisation particulier, le procédé est tel que la période d'inactivité est réinitialisée lorsque l'action de défilement est détectée sur le dispositif d'entrée avant l'expiration de la période.

Chaque nouvelle pression sur le bouton de défilement pendant la période de désactivation relance une nouvelle période d'inactivité. De cette façon, le fonction de défilement reste sans effet tant que l'utilisateur effectue des actions de défilement à des intervalles inférieurs à la période de désactivation. L'utilisateur doit donc attendre la fin de la période pour pouvoir actionner de nouveau la commande de défilement et passer à l'affichage de l'élément suivant. Ce mode de réalisation permet avantageusement au procédé de s'assurer que l'utilisateur à bien pris connaissance du fait que l'élément particulier était en cours d'affichage avant de poursuivre le défilement.

Selon un mode particulier de réalisation, le procédé est tel que la période d'inactivité est immédiatement terminée lorsqu'une action de sélection est détectée sur le dispositif d'entrée.

L'utilisateur peut ainsi sélectionner l'élément affiché malgré la désactivation de la commande de défilement. Par exemple, si la commande de défilement est sans effet suite à l'affichage d'un élément spécifique comme l'élément « retour » d'un sous-menu, l'utilisateur peut tout de même sélectionner l'élément retour afin de revenir au menu principal en utilisant la commande de sélection. Le fait de sélectionner un élément du menu provoque ainsi l'expiration de la période de désactivation du défilement.

Selon un mode de réalisation particulier, le procédé est tel que l'action de défilement est un appui court sur le dispositif d'entrée.

Le procédé permet ainsi de faire défiler rapidement les différents éléments d'un menu par une succession de brèves pression sur un bouton, tout en assurant l'utilisateur que quel que soit le nombre de pressions, le défilement s'arrêtera sur un élément spécifique comme par exemple le dernier élément d'un menu.

Selon un mode de réalisation particulier, le procédé est tel que l'action de sélection est un appui long sur le dispositif d'entrée.

La commande de sélection est distincte de la commande de défilement. Il est ainsi possible pour un utilisateur de sélectionner un élément affiché à l'écran alors que l'action de défilement est désactivé temporairement suite à l'affichage d'un élément prédéterminé comme par exemple le dernier élément d'un menu circulaire.

Selon un autre aspect, l'invention concerne un dispositif de défilement dans une liste comprenant une pluralité d'éléments sélectionnables et configurée de sorte qu'un seul élément de la liste est affiché à un instant donné sur un écran du dispositif, l'affichage de l'élément suivant dans la liste étant déclenché par la détection d'une action de défilement effectuée par un utilisateur sur un dispositif d'entrée associé au dispositif de défilement, le dispositif étant caractérisé en ce qu'il comprend des unités d'affichage d'un élément de la liste ; de détermination qu'un élément prédéterminé de la liste est affiché ; et d'une horloge apte à mettre en oeuvre l'ouverture d'une période d'inactivité de durée prédéterminée pendant laquelle les actions de défilement sur le dispositif d'entrée sont ignorées.

Selon une réalisation particulière, l'invention concerne un équipement électronique comprenant un dispositif de défilement tel que décrit ci-dessus.

Selon un autre aspect, l'invention concerne un programme d'ordinateur comportant les instructions pour l'exécution du procédé de défilement, lorsque le programme est exécuté par un processeur.

Un dernier aspect de l'invention se rapporte à un support d'enregistrement lisible par un ordinateur sur lequel est enregistré un programme d'ordinateur comprenant des instructions pour l'exécution des étapes du procédé de défilement tel que décrit ci-dessus.

Les terminaux, dispositifs, programmes et supports d'enregistrement présentent des avantages analogues à ceux du procédé correspondant décrit ci-dessus.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- La figure 1 illustre un dispositif portatif adapté pour la mise en oeuvre du procédé de défilement, selon un mode particulier de réalisation de l'invention ;
- La figure 2 illustre les principales étapes du procédé de défilement selon un mode particulier de réalisation de l'invention ;
- La figure 3 illustre l'architecture simplifiée d'un dispositif adapté pour la mise en oeuvre du procédé de défilement, selon un mode particulier de réalisation de l'invention.

### DESCRIPTION D'UN MODE DE RÉALISATION PARTICULIER

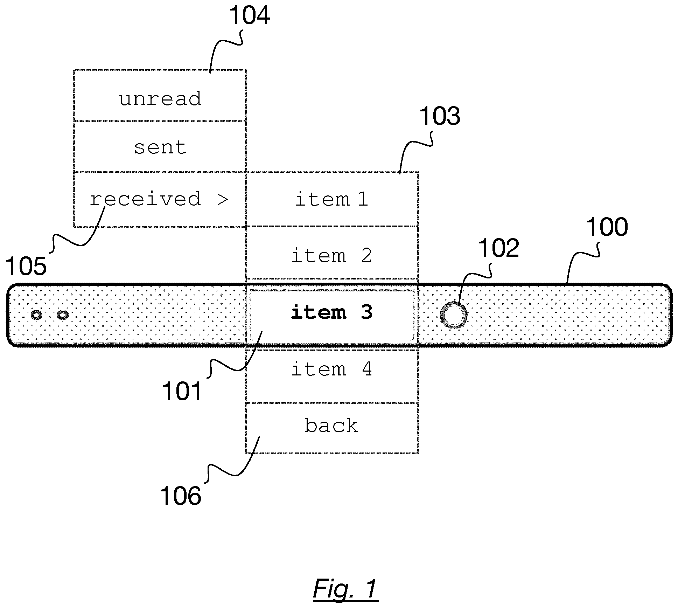

La description suivante prend pour exemple un dispositif portable de type bracelet connecté tel que représenté sur la figure 1. Cet exemple est donné à titre illustratif pour aider à la compréhension de l'invention, mais l'invention peut s'appliquer de la même manière à toute sorte d'équipements disposant d'un écran et d'un dispositif d'interaction.

La figure 1 représente un bracelet connecté 100 comportant un écran 101 et un unique bouton 102. Un tel bracelet peut par exemple servir à afficher des messages reçus sur un téléphone mobile associé. Le bouton 102 est l'unique moyen d'interaction avec l'utilisateur et sert notamment à faire défiler les messages affichés sur l'écran 101 par une succession d'appuis court par exemple et à sélectionner un élément lorsqu'il est affiché à l'écran.

Selon un mode de réalisation particulier, le bouton 102 peut ne pas être intégré au dispositif et communiquer avec ce dernier via une connexion sans fil de type Bluetooth ou WIFI par exemple.

Ce bracelet dispose en outre d'une interface graphique par l'intermédiaire de laquelle un utilisateur peut consulter différentes catégories de messages. Par exemple, le bracelet de la figure 1 dispose d'un menu principal 104, comportant des entrées pour consulter les messages non lus (« unread »), les messages envoyés (« sent ») ou encore par exemple les messages reçus (« received »).

De façon classique, l'utilisateur peut parcourir les différentes entrées de ce menu en effectuant de courtes pressions successives sur le bouton 102, chaque pression provoquant l'affichage de l'entrée suivante sur l'écran. Toujours de manière classique, lorsqu'une courte pression est exercée sur le bouton 102 alors que le dernier élément du menu est affiché, le dispositif affiche à nouveau le premier élément de la liste. Par exemple, à l'initialisation du bracelet représenté sur le figure 1, l'élément de menu « unread » est affiché. Lorsqu'une courte pression est détectée sur le bouton 102, l'élément « sent » est affiché. Une nouvelle pression provoque l'affichage du dernier élément du menu, « received ». A ce stade, si l'utilisateur effectue une autre pression sur le bouton, c'est l'élément « unread » qui est à nouveau affiché car le menu est implémenté de façon circulaire.

Pour accéder au contenu de la rubrique affichée, l'utilisateur effectue par exemple un appui long sur le bouton 102. Par exemple, en effectuant un appui long alors que l'entrée 105 (« received ») est affichée à l'écran, l'utilisateur du bracelet accède à la liste 103 des messages reçus. Il peut alors parcourir cette liste par des courtes pressions successives sur le bouton 102, une courte pression sur le bouton 102 alors que le dernier élément est affiché provoquant le retour en début de liste.

Le dernier élément de la liste des messages reçus est un élément 106 (« back ») qui permet de revenir au menu principal. Ainsi, lorsque l'utilisateur a terminé la consultation d'un message, il effectue un certain nombre d'appuis courts jusqu'à atteindre l'élément permettant un retour au menu principal puis, lorsque cet élément est affiché, il effectue un appui long pour revenir au menu principal. Par exemple, dans la situation représentée sur la figure 1, dans laquelle l'élément « item 3 » est en cours d'affichage, l'utilisateur doit effectuer 2 appuis courts pour atteindre le dernier élément de la liste puis un appui long pour revenir au menu principal. Malheureusement, l'utilisateur ne sais pas toujours à l'avance combien de pression effectuer pour atteindre le dernier élément de la liste car le nombre d'élément peut être variable. D'autre part, le nombre d'éléments peut être relativement élevé et un nombre important de pressions sur le bouton 102 peut s'avérer nécessaire pour atteindre le dernier élément.

Dans cette situation, il arrive souvent que l'utilisateur effectue des pressions rapides sur le bouton pour faire défiler les éléments et atteindre une entrée spécifique sans perdre de temps. Hélas, malgré l'attention portée aux éléments qui défilent sur l'écran, il arrive fréquemment que l'utilisateur effectue une pression en trop, provoquant un retour au début de la liste et l'obligeant à faire défiler à nouveau tous les éléments jusqu'à celui recherché. Ce désagrément occasionne une perte de temps pour l'utilisateur, une consommation accrue d'énergie pour le dispositif conduisant à une réduction de son autonomie et une usure prématurée du bouton de défilement.

Le bracelet représenté ici et selon l'invention permet, pendant une durée prédéterminée, d'ignorer les actions de défilement effectuées sur le bouton 102 lorsque l'élément 106 est affiché. De cette façon, l'élément 106 reste affiché à l'écran même si l'utilisateur effectue quelques appuis supplémentaires sur le bouton 102.

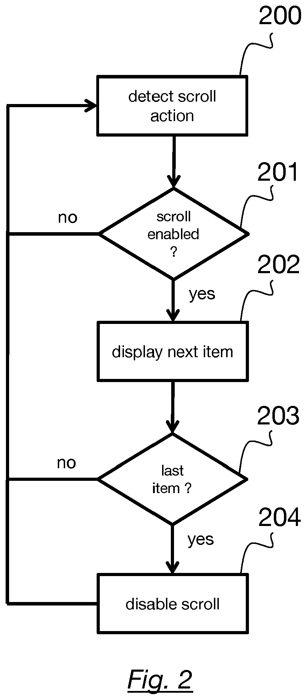

La figure 2 représente les principales étapes du procédé de défilement selon un mode particulier de réalisation de l'invention. À l'initialisation du bracelet, un élément d'une liste est affiché sur l'écran du dispositif. Il peut s'agir d'un élément affiché par défaut, comme par exemple le premier élément d'un menu ou le dernier message reçu dans le cas d'un bracelet tel que décrit en référence à la figure 1.

Lorsque l'utilisateur manipule un dispositif d'entrée associé à l'affichage, il peut commander une action de défilement afin d'afficher par exemple un autre élément de menu sur l'écran. Par exemple, lorsque l'élément « item 3 » du sous-menu 103 décrit en référence à la figure 1 est affiché à l'écran, l'utilisateur peut effectuer un appui court sur un bouton tel que le bouton 102 pour afficher l'élément « item 4 » du sous-menu 103. Cette action de l'utilisateur est détectée lors d'une étape 200 et provoque l'affichage de l'élément suivant à l'étape 202. Selon une réalisation particulière, l'action de l'utilisateur est une action de défilement déclenchée par un appui court sur un dispositif d'entrée associé au dispositif. Par exemple, il peut s'agir d'une brève pression sur un bouton poussoir ou tactile associé au dispositif.

Lors d'une étape 203, le dispositif détermine si un élément prédéterminé est affiché. Il peut s'agir par exemple d'un élément spécifique qui nécessite une attention particulière de l'utilisateur lorsqu'il est affiché, comme l'élément 106 (« back ») du sous-menu 103 de la figure 1 qui permet le retour au menu principal. Le fait qu'un élément d'une liste ou d'un menu nécessite une attention particulière peut être mémorisé par exemple dans une table associé à la structure du menu stocké dans une mémoire du dispositif.

Selon une réalisation particulière, l'élément spécifique est un élément favori définit par l'utilisateur par une configuration préalable. Par exemple, si l'utilisateur utilise régulièrement une fonction spécifique d'un dispositif tel que le bracelet décrit en référence à la figure 1, il peut désigner l'élément de menu correspondant à cette fonction comme favori lors d'une étape de configuration préalable.

Selon un mode de réalisation particulier, un élément spécifique peut être déterminé automatiquement par apprentissage à partir de statistiques d'usages. Par exemple, s'il est constaté par analyse de l'usage que l'utilisateur accède plus souvent à l'élément 105 (« received ») du menu 104 qu'autres éléments du menu, cet élément peut être marqué comme étant spécifique.

Selon un mode de réalisation particulier, l'élément spécifique est le dernier élément d'une liste circulaire, la liste circulaire étant définie par le fait que l'élément suivant le dernier élément est le premier élément de la liste. De cette façon, le procédé permet d'avertir un utilisateur qu'il arrive en fin de liste avant de reboucler sur le premier élément de cette liste. Ceci est particulièrement avantageux dans le cas où le dernier élément de la liste est un élément de type « retour » qui permet de quitter une rubrique car cela permet d'éviter à un utilisateur de devoir parcourir à nouveau tous les éléments de la liste lorsqu'une action de défilement supplémentaire a été effectuée par erreur.

Lorsqu'il est déterminé à l'étape 203 qu'un élément spécifique est affiché, le dispositif déclenche l'ouverture à l'étape 204 d'une période pendant laquelle les actions sur le dispositif d'entrée sont ignorées de façon à interdire l'affichage d'un élément autre que l'élément spécifique en cours d'affichage. Pour cela, le dispositif mettant en oeuvre le procédé selon l'invention peut déclencher un compte à rebours d'une durée prédéterminée, par exemple d'une seconde. Ce compte à rebours peut par exemple être mis en oeuvre à l'aide d'une horloge adaptée pour signaler le début et la fin d'une période. Lorsqu'une action est détectée sur un dispositif d'entrée, le dispositif contrôle l'état du compte à rebours de façon à ce que les actions sur le dispositif d'entrée soient ignorées tant que le décompte n'est pas terminé. Cette période d'inactivité pendant laquelle les actions de l'utilisateur sont sans effet permet de garantir que le défilement des éléments de la liste s'arrêtera sur certains éléments spécifiques, même si des actions de défilement sont réalisées en trop grand nombre.

Selon un mode de réalisation particulier, la période d'inactivité est réinitialisée lorsqu'une action de défilement est exécutée pendant la période d'inactivité. De cette façon, le passage à l'élément suivant ne peut se faire que lorsque qu'aucune action de défilement n'est réalisée pendant une durée correspondant à la période d'inactivité. Pour cela, le dispositif peut par exemple réarmer un compte à rebours à chaque fois qu'une action de défilement est détectée et qu'une période d'inactivité précédente n'est pas encore terminée.

Selon un mode particulier de réalisation, seules les actions de défilement sont ignorées lorsqu'une période d'inactivité est engagée. Ainsi, d'autres actions comme par exemple une action de sélection de l'élément affiché peut être prise en compte par le dispositif pendant la période d'inactivité. Pour cela, le dispositif peut filtrer les actions détectées de façon à ignorer les actions de défilement (comme par exemple les appuis courts sur un dispositif d'entrée) tout en prenant en compte d'autres actions comme par exemple des actions de sélection de l'élément en cours d'affichage.

Selon une réalisation particulière, l'action de sélection peut consister par exemple en un appui long sur un dispositif d'entrée. De cette façon, l'utilisateur peut effectuer des courtes pressions pour faire défiler les éléments d'un menu et une pression plus longue pour sélectionner l'élément en cours d'affichage.

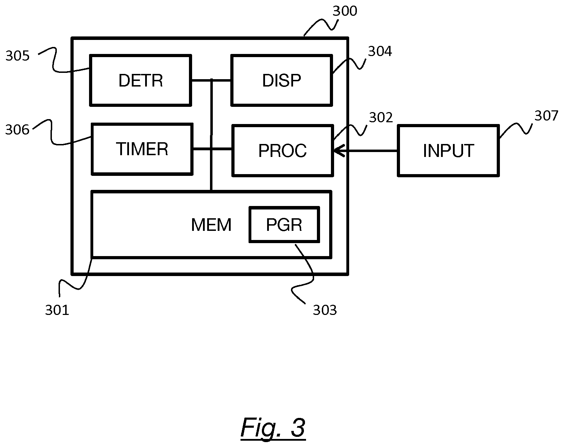

La figure 3 illustre un dispositif 300 mettant en oeuvre le procédé de défilement, selon un mode particulier de réalisation de l'invention. Le dispositif comprend un espace de stockage 301, par exemple une mémoire MEM, une unité de traitement 302 équipée par exemple d'un processeur PROC. L'unité de traitement peut être pilotée par un programme 303, par exemple un programme d'ordinateur PGR, mettant en oeuvre le procédé de défilement tel que décrit dans l'invention en référence aux figures 1 et 2, et notamment les étapes d'affichage d'un élément de la liste, de détermination qu'un élément prédéterminé de la liste est affiché, et d'ouverture d'une période d'inactivité de durée prédéterminée pendant laquelle les actions de défilement sur le dispositif d'entrée sont ignorées.

À l'initialisation, les instructions du programme d'ordinateur 303 sont par exemple chargées dans une mémoire RAM (Random Access Memory) avant d'être exécutées par le processeur de l'unité de traitement 302. Le processeur de l'unité de traitement 302 met en oeuvre les étapes du procédé de défilement selon les instructions du programme d'ordinateur 303.

Pour cela, le dispositif comprend, outre la mémoire 301, une unité d'affichage 304 d'un élément d'une liste, comme par exemple un écran DISP adapté pour afficher un élément de menu. Le dispositif comprend également une unité de détermination 305 qu'un élément prédéterminé est affiché sur l'écran, et une unité d'ouverture (303) d'une période d'inactivité de durée prédéterminée pendant laquelle les actions de défilement sur le dispositif d'entrée sont ignorées. L'unité d'ouverture d'une période d'inactivité peut par exemple être une horloge déclenchée lorsqu'un élément prédéterminé est affiché. Le dispositif comprend en outre un dispositif d'entrée 307, comme par exemple un bouton poussoir INPUT activé par pression, la pression pouvant être variable. Le dispositif d'entrée 307 peut ou non être intégré au dispositif. Quand le dispositif d'entrée n'est pas intégré au dispositif, il peut y être raccordé par une liaison filaire ou sans fil, comme par exemple une connexion WIFI, Bluetooth ou encore infra-rouge. Le dispositif d'entrée peut également être un écran tactile ou encore un capteur de mouvements de type accéléromètre par exemple adapté pour interpréter certains mouvements comme une action de défilement.

Selon un mode particulier de réalisation, le dispositif peut être intégré dans un équipement connecté de type bracelet, montre, pot de fleur, ou encore brosse à dent ou fourchette connectée. Selon un mode de réalisation, le dispositif peut également être intégré dans un équipement de type cigarette électronique, lecteur de musique portable, autoradio ou tout autre équipement électronique disposant d'un écran et d'un dispositif d'entrée.

L'invention est définie par les revendications annexées. Des variantes avantageuses sont décrites dans les revendications dépendantes.

## Revendications

1. Procédé de contrôle de défilement dans une liste comprenant une pluralité d'éléments sélectionnables et configurée de sorte qu'un seul élément de la liste est affiché à un instant donné sur une interface, la détection d'une action (200) sur un dispositif d'entrée associé au terminal, dite action de défilement, provoquant l'affichage d'un élément suivant de la liste, le procédé comprenant les étapes suivantes :
- Affichage (202) d'un élément de la liste,
- Détermination (203) qu'un élément spécifique de la liste est affiché, l'élément spécifique étant déterminé automatiquement par apprentissage à partir de statistiques d'usages, et
- Ouverture (204) d'une période d'inactivité de durée prédéterminée pendant laquelle les actions de défilement supplémentaires sur le dispositif d'entrée sont ignorées.

2. Procédé selon la revendication 1 **caractérisé en ce que** l'interface est configurée pour afficher le premier élément de la liste lorsque l'action de défilement est détectée et que le dernier élément de la liste est affiché, et **en ce que** l'élément spécifique est le dernier élément de la liste.

3. Procédé selon l'une des revendications 1 ou 2 **caractérisé en ce que** la période d'inactivité est réinitialisée lorsque l'action de défilement est détectée sur le dispositif d'entrée avant l'expiration de la période.

4. Procédé selon l'une des revendications précédentes **caractérisé en ce que** la période d'inactivité est immédiatement terminée lorsqu'une action de sélection est détectée sur le dispositif d'entrée.

5. Procédé selon l'une des revendications précédentes **caractérisé en ce que** l'action de défilement est un appui court sur le dispositif d'entrée.

6. Procédé selon la revendication 4 **caractérisé en ce que** l'action de sélection est un appui long sur le dispositif d'entrée.

7. Dispositif de contrôle de défilement dans une liste comprenant une pluralité d'éléments sélectionnables et configurée de sorte qu'un seul élément de la liste est affiché à un instant donné sur un écran du dispositif, la détection d'une action sur un dispositif d'entrée associé au terminal, dite action de défilement, provoquant l'affichage d'un élément suivant de la liste, le dispositif comprenant des unités :
- D'affichage (301) d'un élément de la liste,
- De détermination (302) qu'un élément spécifique de la liste est affiché, l'élément spécifique étant déterminé automatiquement par apprentissage à partir de statistiques d'usages, et
- D'une horloge apte à mettre en oeuvre une ouverture (303) d'une période d'inactivité de durée prédéterminée pendant laquelle les actions de défilement supplémentaires sur le dispositif d'entrée sont ignorées.

8. Équipement électronique **caractérisé en ce qu'**il comprend un dispositif selon la revendication 7.

9. Programme d'ordinateur comportant des instructions pour l'exécution du procédé de défilement selon l'une quelconque des revendications 1 à 6, lorsque le programme est exécuté par un processeur.

10. Support d'enregistrement lisible par un ordinateur sur lequel est enregistré un programme d'ordinateur comprenant des instructions pour l'exécution des étapes du procédé de défilement selon l'une des revendications 1 à 6.

## Patentansprüche

1. Verfahren zur Steuerung des Scrollens in einer Liste, welche mehrere auswählbare Elemente umfasst und derart gestaltet ist, dass zu einem gegebenen Zeitpunkt ein einziges Element der Liste auf einer Schnittstelle angezeigt wird, wobei die Detektion einer Aktion (200) an einer dem Endgerät zugeordneten Eingabevorrichtung, Scrollaktion genannt, das Anzeigen eines nächstfolgenden Elements der Liste hervorruft, wobei das Verfahren die folgenden Schritte umfasst:
- Anzeigen (202) eines Elements der Liste,
- Bestimmung (203), dass ein spezifisches Element der Liste angezeigt wird, wobei das spezifische Element durch Lernen aus Nutzungsstatistiken automatisch bestimmt wird, und
- Einleitung (204) einer Inaktivitätsperiode von vorbestimmter Dauer, während der die zusätzlichen Scrollaktionen an der Eingabevorrichtung ignoriert werden.

2. Verfahren nach Anspruch 1, **dadurch gekennzeichnet, dass** die Schnittstelle dafür ausgelegt ist, das erste Element der Liste anzuzeigen, wenn die Scrollaktion detektiert wird und das letzte Element der Liste angezeigt wird, und dadurch, dass das spezifische Element das letzte Element der Liste ist.

3. Verfahren nach einem der Ansprüche 1 oder 2, **dadurch gekennzeichnet, dass** die Inaktivitätsperiode erneut initialisiert wird, wenn vor Ablauf der Periode die Scrollaktion an der Eingabevorrichtung detektiert wird.

4. Verfahren nach einem der vorhergehenden Ansprüche, **dadurch gekennzeichnet, dass** die Inaktivitätsperiode sofort beendet wird, wenn eine Auswahlaktion an der Eingabevorrichtung detektiert wird.

5. Verfahren nach einem der vorhergehenden Ansprüche, **dadurch gekennzeichnet, dass** die Scrollaktion ein kurzes Drücken auf die Eingabevorrichtung ist.

6. Verfahren nach Anspruch 4, **dadurch gekennzeichnet, dass** die Auswahlaktion ein langes Drücken auf die Eingabevorrichtung ist.

7. Vorrichtung zur Steuerung des Scrollens in einer Liste, welche mehrere auswählbare Elemente umfasst und derart gestaltet ist, dass zu einem gegebenen Zeitpunkt ein einziges Element der Liste auf einem Bildschirm der Vorrichtung angezeigt wird, wobei die Detektion einer Aktion an einer dem Endgerät zugeordneten Eingabevorrichtung, Scrollaktion genannt, das Anzeigen eines nächstfolgenden Elements der Liste hervorruft, wobei die Vorrichtung Einheiten umfasst:
- zum Anzeigen (301) eines Elements der Liste,
- zur Bestimmung (302), dass ein spezifisches Element der Liste angezeigt wird, wobei das spezifische Element durch Lernen aus Nutzungsstatistiken automatisch bestimmt wird, und
- eines Zeitgebers, der in der Lage ist, eine Einleitung (303) einer Inaktivitätsperiode von vorbestimmter Dauer durchzuführen, während der die zusätzlichen Scrollaktionen an der Eingabevorrichtung ignoriert werden.

8. Elektronische Einrichtung, **dadurch gekennzeichnet, dass** sie eine Vorrichtung nach Anspruch 7 umfasst.

9. Computerprogramm, welches Anweisungen zur Ausführung des Verfahrens zum Scrollen nach einem der Ansprüche 1 bis 6, wenn das Programm von einem Prozessor ausgeführt wird, umfasst.

10. Computerlesbares Aufzeichnungsmedium, auf welchem ein Computerprogramm aufgezeichnet ist, das Anweisungen zur Ausführung der Schritte des Verfahrens zum Scrollen nach einem der Ansprüche 1 bis 6 umfasst.

## Claims

1. Method to control scrolling through a list comprising a plurality of selectable items and configured so that a single item in the list is displayed at a given instant on an interface, the detection of an action (200), referred to as a scrolling action, on an input device associated with the terminal prompting the display of the next item in the list, the method having the following steps:
- display (202) of an item in the list,
- etermination (203) that a specific item in the list is displayed, the specific item being determined automatically by learning from use statistics, and
- opening (204) of a period of inactivity of predetermined duration during which additional scrolling actions on the input device are ignored.

2. Method according to Claim 1, **characterized in that** the interface is configured to display the first item in the list when the scrolling action is detected and the last item in the list is displayed, and **in that** the specific item is the last item in the list.

3. Method according to either of Claims 1 or 2, **characterized in that** the period of inactivity is reinitialized when the scrolling action is detected on the input device before expiry of the period.

4. Method according to one of the preceding claims, **characterized in that** the period of inactivity is immediately terminated when a selection action is detected on the input device.

5. Method according to one of the preceding claims, **characterized in that** the scrolling action is a short tap on the input device.

6. Method according to Claim 4, **characterized in that** the selection action is a long tap on the input device.

7. Device to control scrolling though a list comprising a plurality of selectable items and configured so that a single item in the list is displayed at a given instant on a screen of the device, the detection of an action, referred to as a scrolling action, on an input device associated with the terminal prompting the display of the next item in the list, the device comprising units:
- for display (301) of an item in the list,
- for determination (302) that a specific item in the list is displayed, the specific item being determined automatically by learning from use statistics, and
- of a clock that is capable of implementing opening (303) of a period of inactivity of predetermined duration during which additional scrolling actions on the input device are ignored.

8. Piece of electronic equipment, **characterized in that** it comprises a device according to Claim 7.

9. Computer program having instructions for execution of the method for scrolling according to any one of Claims 1 to 6 when the program is executed by a processor.

10. Computer-readable recording medium on which is recorded a computer program comprising instructions for execution of the steps of the method for scrolling according to one of Claims 1 to 6.
